# EUROPÄISCHE PATENTSCHRIFT

(11) **EP 2 082 637 B1**
(45) Veröffentlichungstag und Bekanntmachung des Hinweises auf die Patenterteilung: **27.07.2011**
(21) Anmeldenummer: 08021064.4
(22) Anmeldetag: 04.12.2008
(51) Int. Cl.: A01B 59/042, A01B 69/00

(54) **Landwirtschaftliche Maschine mit einer schwenk- und feststell-baren Mittendeichsel**
Agricultural machine with a swivelling and fixable middle drawbar
Machine agricole dotée d'un timon de milieu pivotant et réglable

(30) Priorität: 27.01.2008 DE 202008001197 U
(43) Veröffentlichungstag der Anmeldung: 29.07.2009
(73) Patentinhaber: CLAAS Saulgau GmbH, 88348 Bad Saulgau (DE)
(72) Erfinder: Epp, Siegfried, 88454 Hochdorf (DE); Ober, Martin, 78736 Epfendorf (DE)

(56) Entgegenhaltungen:
- EP-A- 1 179 293
- DE-A1-102007 020 744
- FR-A- 2 608 358
- US-A- 5 255 756
- US-A- 5 335 856

## Beschreibung

Die Erfindung betrifft einen Verstellmechanismus zum symmetrischen verstellen einer Schwenkdeichsel an landwirtschaftlichen Maschinen gemäß dem Oberbegriff des unabhängigen Anspruchs 1.

### Stand der Technik

Gezogene landwirtschaftliche Arbeitsmaschinen, die in der Arbeitsstellung seitlich der Spur und in der Straßentransportfahrt mittig hinter der Zugmaschine laufen, werden an verschwenkbaren Deichsel geführt. Beispielsweise gezogene Mähwerke mit Mittendeichsel besitzen eine Schwenkeinrichtung, die es ermöglicht, das Gerät links oder rechts neben der Zugmaschine bzw. neben dem Traktor zu versetzen und dabei dieses auch in die Mittelstellung für die Transportfahrt zu überführen. In den ausgeschwenkten Positionen befindet sich das Gerät dann in Arbeitsposition. In Transportstellung ist die Maschine hinter die Zugmaschine geschwenkt. Der Schwenkwinkel bzw. der daraus resultierende Versatz in der Arbeitsstellung soll in beiden Arbeitsstellungen nach beiden Seiten bezogen auf die Fahrspur des Traktors gleich groß sein. Sowohl in der Transportstellung, als auch in den verschiedenen Arbeitsstellungen muss das Mähwerk dann relativ zur Zugmaschine eine stabile Führungslage aufweisen, was bedeutet, dass die Zugdeichsel in ihrem jeweiligen Schwenkwinkel verriegelt sein muss.

Der aktuelle Stand der Technik zeigt einen Mangel hinsichtlich der Möglichkeit der Spurbreitenanpassung. Ausgehend von der Transportstellung stehen die Verkürzung und die Verlängerung des Schwenkzylinders, um einen nach beiden Seiten gleichen Schwenkwinkel zu bekommen, in einem konstruktiv festgelegten Verhältnis zueinander. Will man nun einen größeren Schwenkwinkel für die Zugdeichsel bekommen, muss der Zylinder zum einen verkürzt werden, und damit der Schwenkwinkel symmetrisch bleibt, zum anderen verlängert werden. Dabei stößt man an die Grenzen der technischen Machbarkeit von doppeltwirkenden Hydraulikzylindern, da dann die Hübe nicht mehr ausreichen, bzw. die Verkürzung und Verlängerung der Einbaumaße der Hydraulikzylinder nicht gleich sind. FR-A-2608358 zeigt einen stand der Technik mit den Merkmalen des Oberbegrittes des Anspruchs 1.

### Aufgabenstellung

Aufgabe der Erfindung ist es, eine verbesserte Lösung für eine Schwenk- und Verriegelungseinrichtung für angehängte Landmaschinen, die mit seitlichem Versatz zur Spur der Zugmaschine laufen, vorzuschlagen. Diese soll es zudem ermöglichen, bei unterschiedlichen Spur- und Reifenbreiten des Zugfahrzeugs und / oder unterschiedlichen Arbeitsbreiten der angehängten Landmaschine, die angehängte Landmaschine mit geringem Aufwand an diese unterschiedlichen und variablen Anforderungen anpassen bzw. einstellen zu können. Dieses soll auch unter dem Gesichtspunkt der modularen Bauweise für Typenreihen verschiedener Arbeitsbreiten gelten.

### Lösung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Für das Schwenken der Zugdeichsel verwendet man zwei einfach wirkende Hydraulikzylinder, die kolbenbodenseitig beaufschlagt sind. Beim Ausschwenken in die jeweilige Arbeitsstellung links oder rechts von dem Zugfahrzeug fährt der einfahrende Zylinder immer auf Block und dient damit zugleich als fest vorgegebener Anschlag für die Endstellung. Der zu überstreichende Schwenkwinkel wird durch symmetrisch angeordnete Absteckpositionen für die einfach wirkenden Hydraulikzylinder eingestellt. Die Folge der unterschiedlichen Absteckpositionen sind unterschiedliche Schwenkwinkel, und damit unterschiedliche seitliche Versätze des hinteren Teils der Landmaschine, welche die Arbeitswerkzeuge aufnimmt, wobei somit keine Endanschläge versetzt oder neu justiert werden müssen. Die Lage und Anzahl der Absteckpunkte der verschiedenen Absteckpositionen deckt ein weites Anwendungsspektrum für die Landmaschine in Bezug auf die Größe des Traktors, seiner Spurbreite und der Reifenbreite ab, wodurch der seitliche Versatz des hinteren Teils der Landmaschine bei gleicher Deichsellänge variiert werden kann. Dieses beinhaltet den Vorteil, dass die selbe Landmaschine mit geringstem Verstellaufwand an verschieden Traktoren mit unterschiedlichen Spurweiten und unterschiedlich breiten Reifen angepasst werden kann.

In einer weiteren Ausgestaltung der Erfindung kann die Erfindung für den Hersteller von Landmaschinen dieser Gattung zudem den Vorteil bieten, dass mit der gleichen Zugdeichsel und der erfinderischen Verstelleinrichtung verschiedene Arbeitsbreiten von Typenreihen abgedeckt werden können, da diese Art der Schwenkwinkelverstellung auch auf unterschiedliche Arbeitsbreiten von Landmaschinen anwendbar ist.

Eine zusätzliche Feineinstellung wird durch die Verstellung der Grundlänge des Hydraulikzylinders erreicht. Über ein Verstellgewinde ausgeführt als Gewindespindel ist dies stufenlos möglich. In einer besonders kostengünstigen Ausführung können als Hydraulikzylinder auch Plungerzylinder ausgeführt sein. In jedem Fall ist es möglich zwei exakt gleiche und damit identische Hydraulikzylinder zu verwenden, welches zudem einen wirtschaftlichen und damit einen Kostenvorteil beinhaltet

### Ausführungsbeispiel

Nähere Einzelheiten der Erfindung sind den nachfolgenden Figurendarstellungen und deren Beschreibungen am Beispiel eines angehängten Mähwerks zu entnehmen.

Es zeigen:

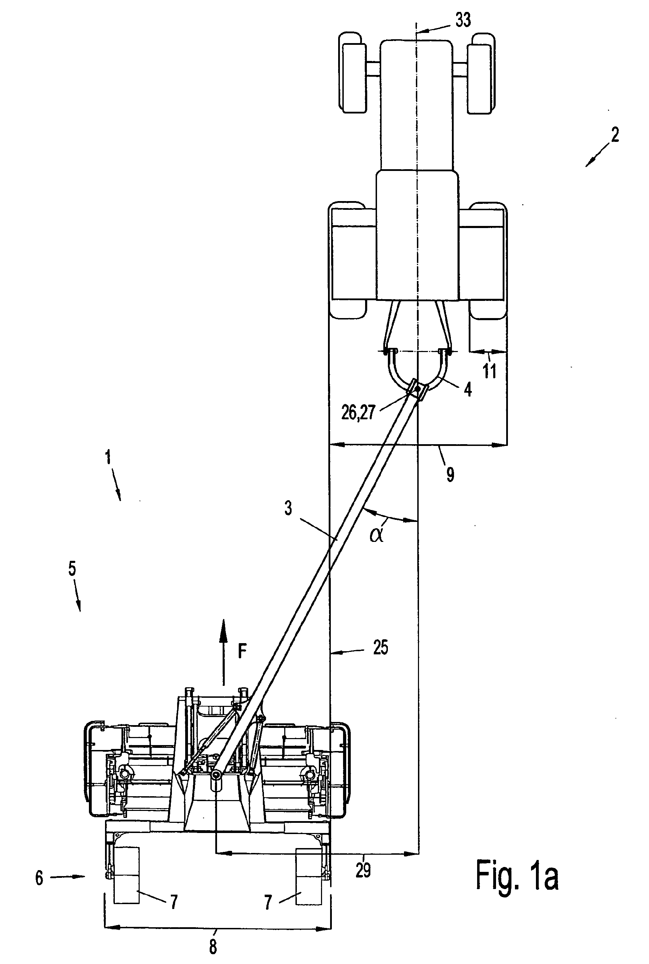

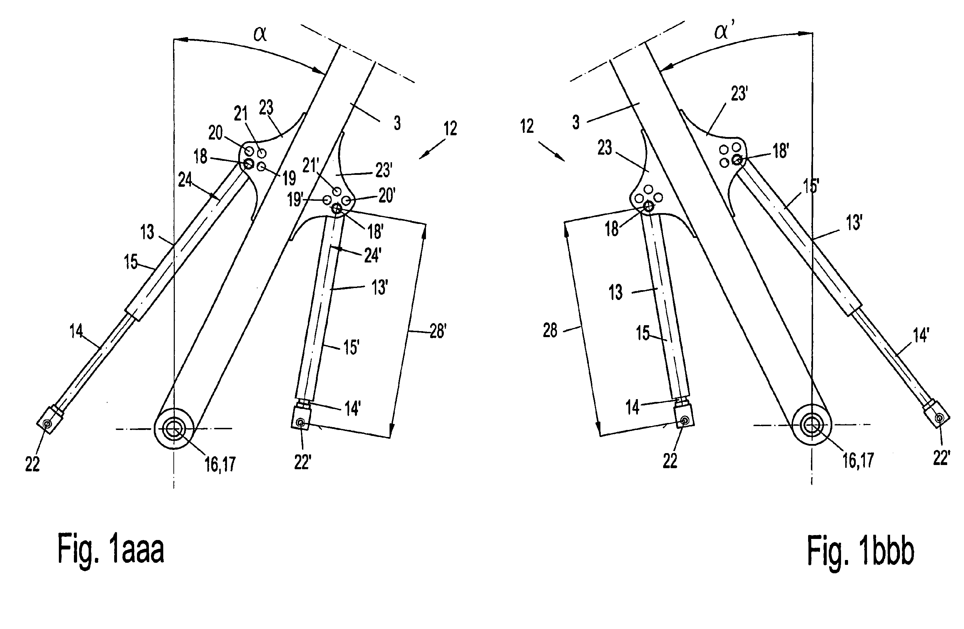

- Fig. 1a: zeigt ein in Arbeitsstellung verschwenktes Mähwerk linksseitig vom Traktor mit geringer Spurbreite der hinteren Achse und deren Hinterräder

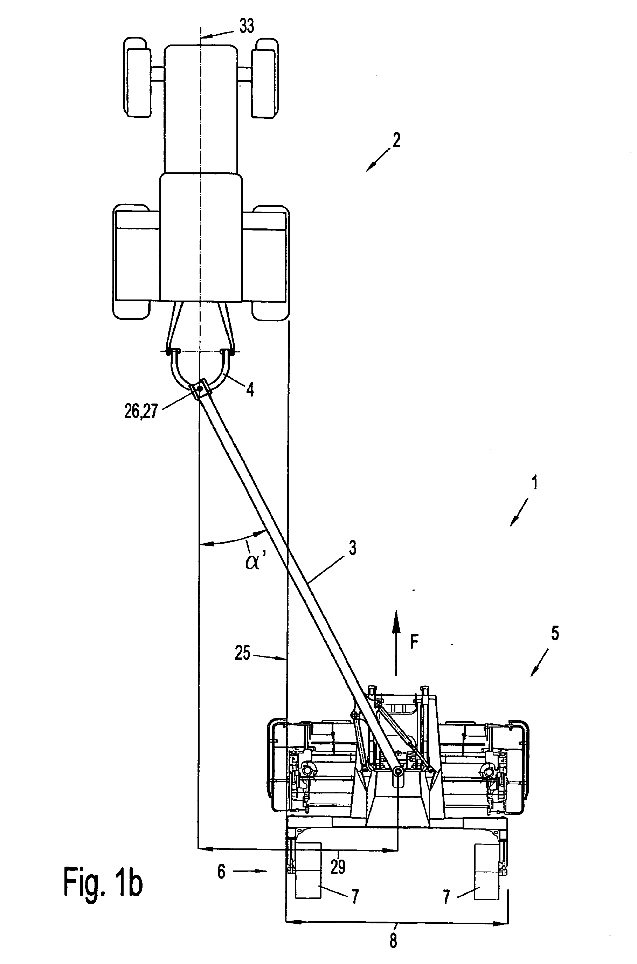

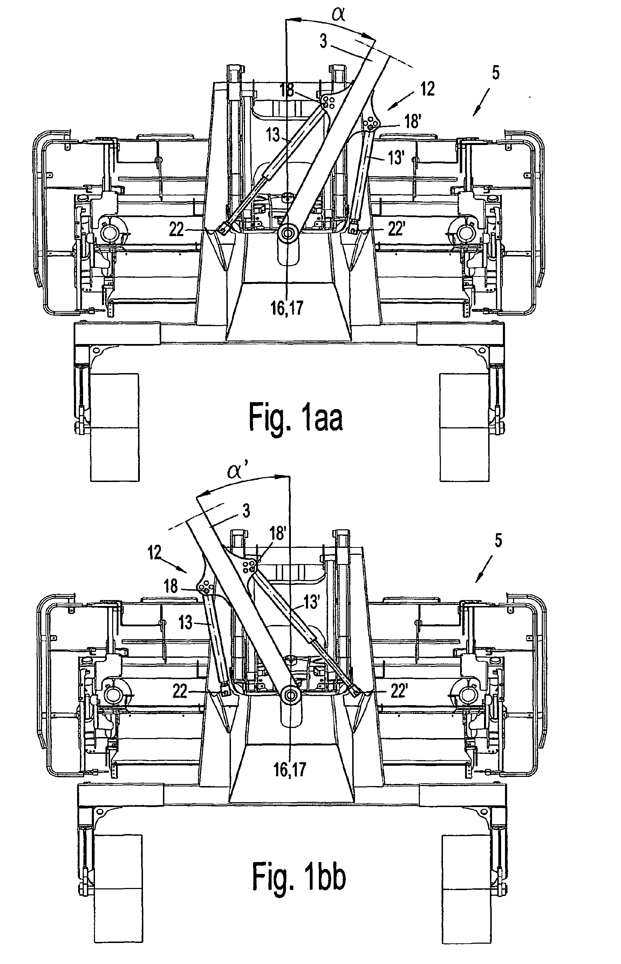

- Fig. 1aa: zeigt einen vergrößerten Ausschnitt des hinteren Teils des Mähwerks gemäß Fig. 1 a
- Fig. 1aaa: zeigt die freigelegte Verstelleinrichtung als vergrößerten Ausschnitt des hinteren Teils des Mähwerks gemäß Fig. 1 aa
- Fig. 2a: zeigt ein in Arbeitsstellung verschwenktes Mähwerk rechtsseitig vom Traktor mit geringer Spurbreite der hinteren Achse und deren Hinterräder
- Fig. 2aa: zeigt einen vergrößerten Ausschnitt des hinteren Teils des Mähwerks gemäß Fig. 2a

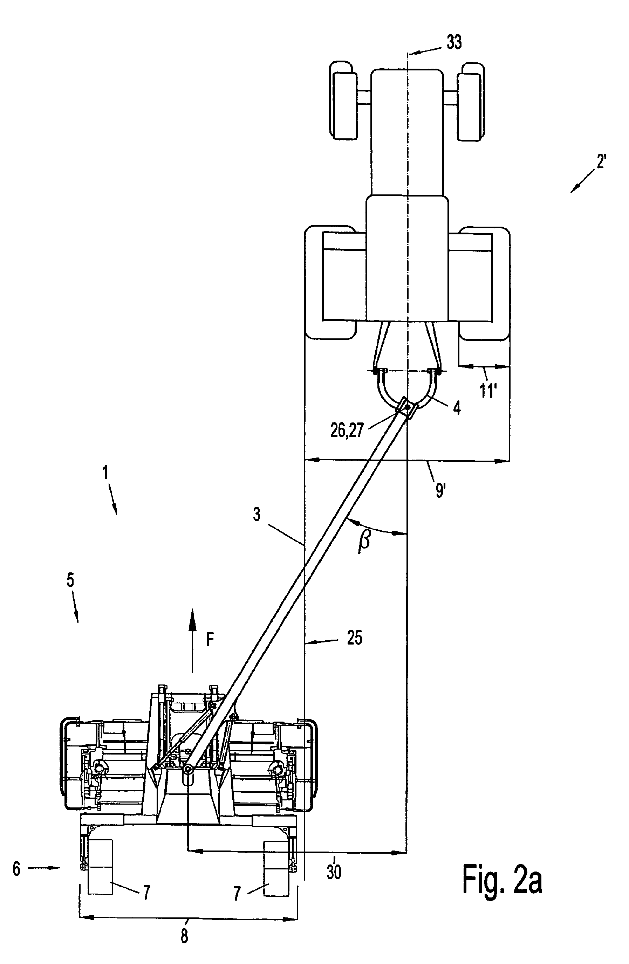

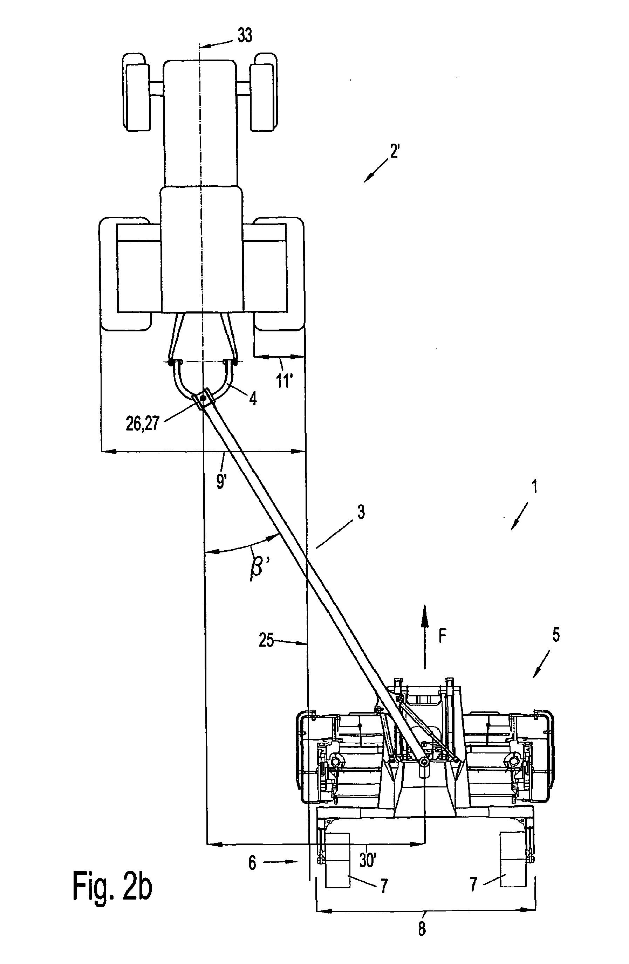

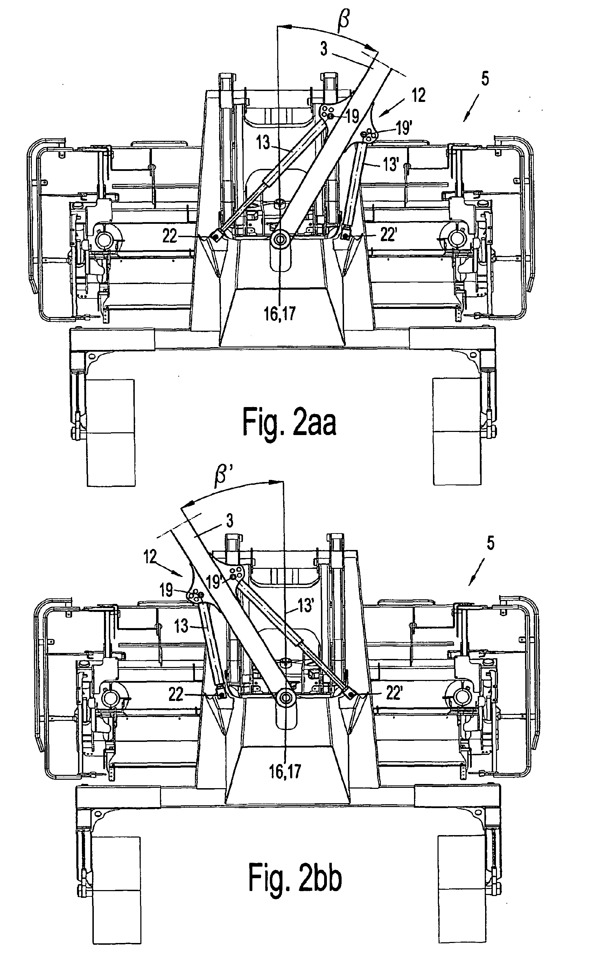

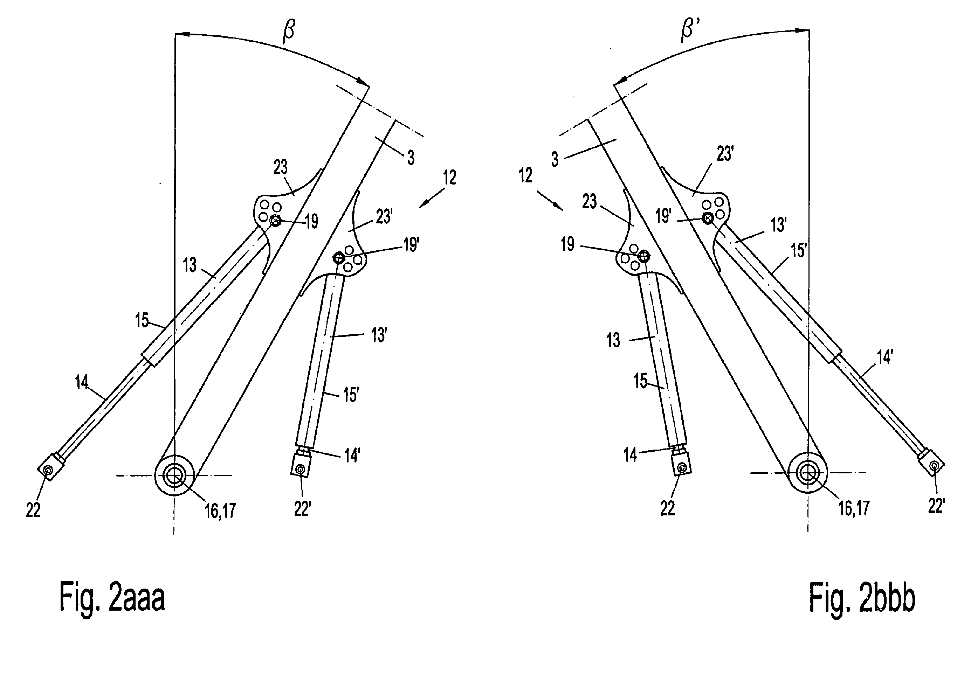

- Fig. 2aaa: zeigt die freigelegte Verstelleinrichtung als vergrößerten Ausschnitt des hinteren Teils des Mähwerks gemäß Fig. 2aa
- Fig. 1 a: zeigt ein in Arbeitsstellung verschwenktes Mähwerk linksseitig vom Traktor mit geringer Spurbreite der hinteren Achse und deren Hinterräder
- Fig. 1 aa: zeigt einen vergrößerten Ausschnitt des hinteren Teils des Mähwerks gemäß Fig. 1 a
- Fig. 1 aaa: zeigt die freigelegte Verstelleinrichtung als vergrößerten Ausschnitt des hinteren Teils des Mähwerks gemäß Fig. 1 aa
- Fig. 1 b: zeigt ein in Arbeitsstellung verschwenktes Mähwerk rechtsseitig vom Traktor mit geringer Spurbreite der hinteren Achse und deren Hinterräder
- Fig. 1 bb: zeigt einen vergrößerten Ausschnitt des hinteren Teils des Mähwerks gemäß Fig. 1b

- Fig. 1 bbb: zeigt die freigelegte Verstelleinrichtung als vergrößerten Ausschnitt des hinteren Teils des Mähwerks gemäß Fig. 2bb
- Fig. 2a: zeigt ein in Arbeitsstellung verschwenktes Mähwerk linksseitig vom Traktor mit größerer Spurbreite der hinteren Achse und deren Hinterräder
- Fig. 2aa: zeigt einen vergrößerten Ausschnitt des hinteren Teils des Mähwerks gemäß Fig. 2a
- Fig. 2aaa: zeigt die freigelegte Verstelleinrichtung als vergrößerten Ausschnitt des hinteren Teils des Mähwerks gemäß Fig. 2aa
- Fig. 2b: zeigt ein in Arbeitsstellung verschwenktes Mähwerk rechtsseitig vom Traktor mit größerer Spurbreite der hinteren Achse und deren Hinterräder
- Fig. 2bb: zeigt einen vergrößerten Ausschnitt des hinteren Teils des Mähwerks gemäß Fig. 2b
- Fig. 2bbb: zeigt die freigelegte Verstelleinrichtung als vergrößerten Ausschnitt des hinteren Teils des Mähwerks gemäß Fig. 2bb

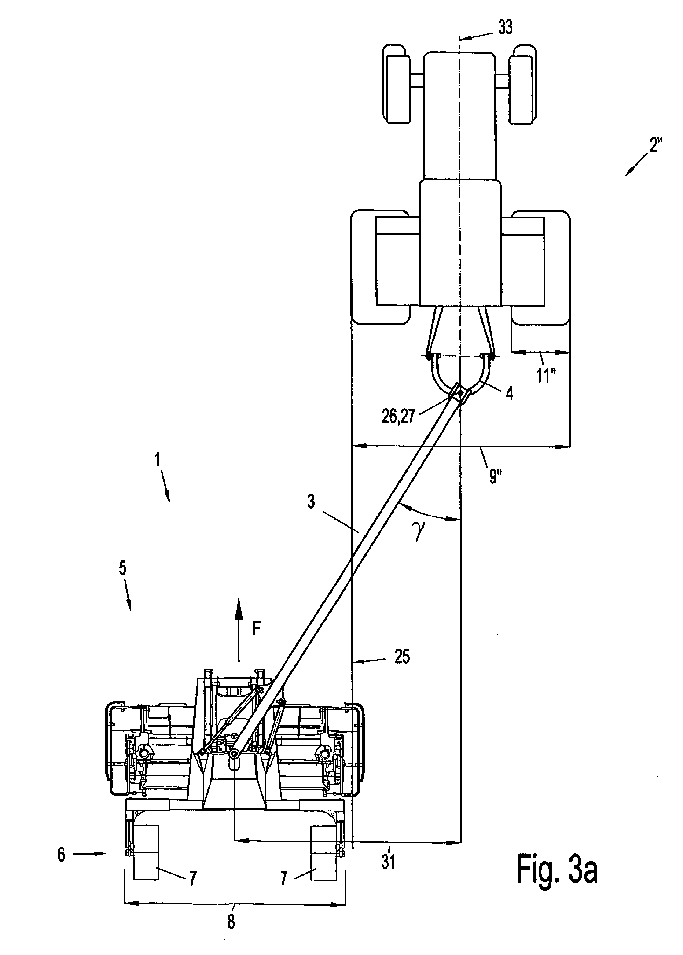

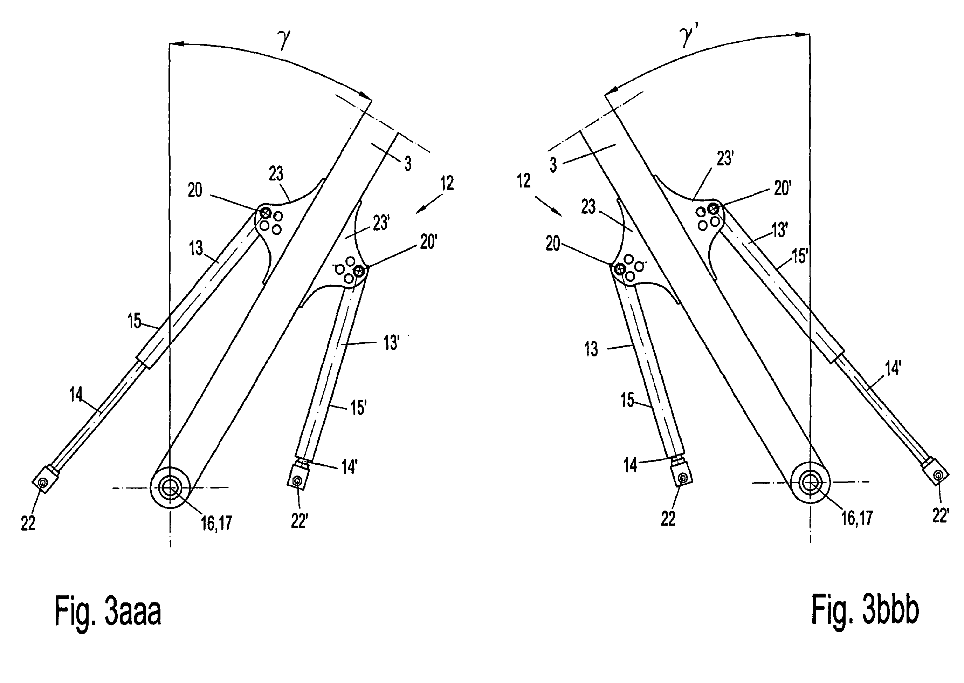

- Fig. 3a: zeigt ein in Arbeitsstellung verschwenktes Mähwerk linksseitig vom Traktor mit größerer Spurbreite der hinteren Achse und deren Hinterräder und breiterer Bereifung auf der Hinterachse.

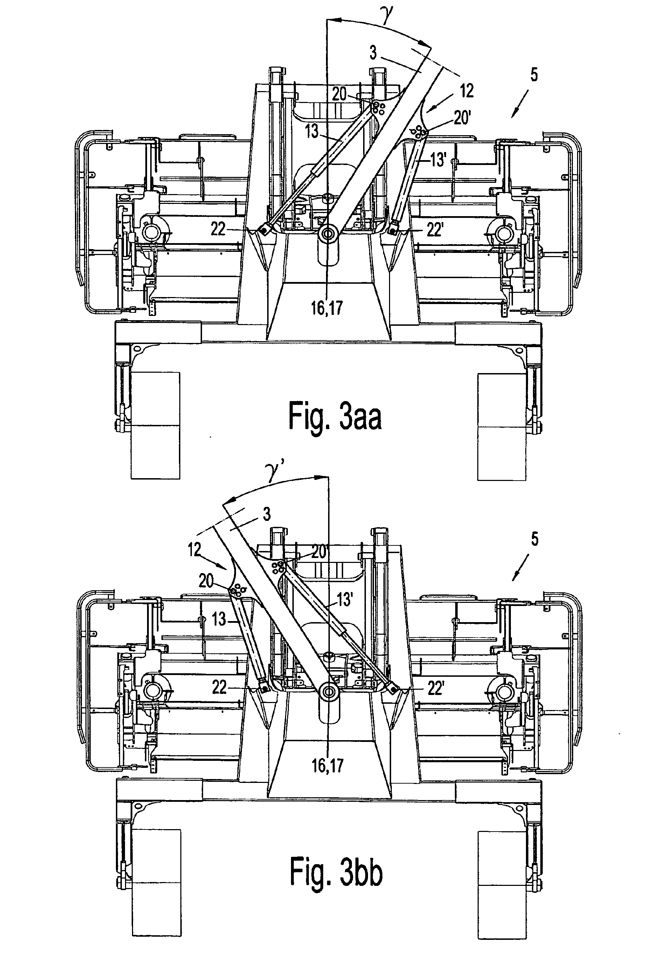

- Fig. 3aa: zeigt einen vergrößerten Ausschnitt des hinteren Teils des Mähwerks gemäß Fig. 3a

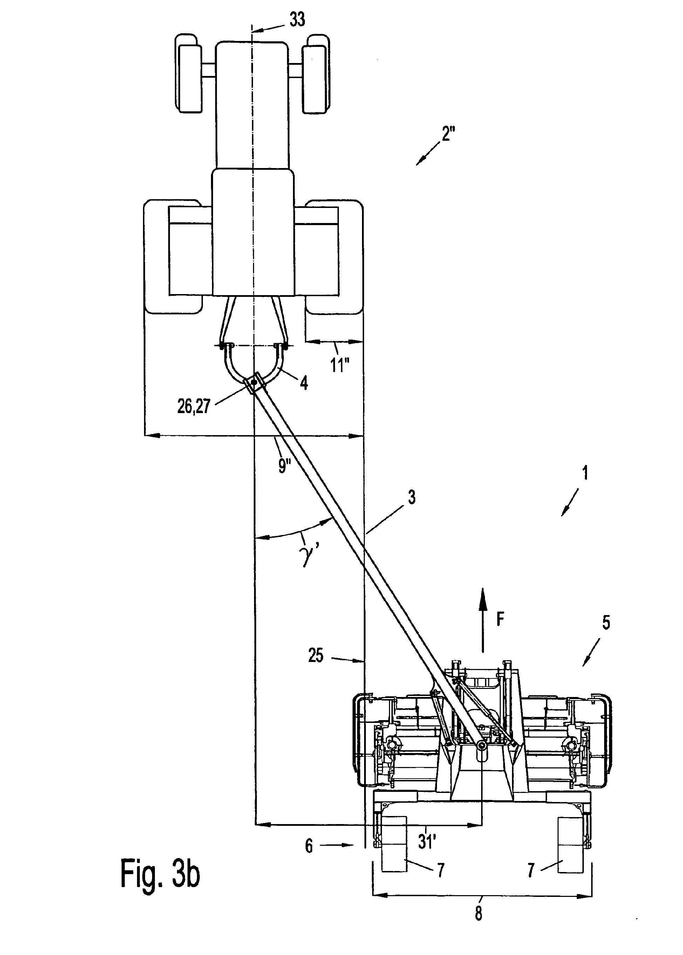

- Fig. 3aaa: zeigt die freigelegte Verstelleinrichtung als vergrößerten Ausschnitt des hinteren Teils des Mähwerks gemäß Fig. 3aa

- Fig. 3b: zeigt ein in Arbeitsstellung verschwenktes Mähwerk rechtsseitig vom Traktor mit größerer Spurbreite der hinteren Achse und deren Hinterräder und breiterer Bereifung auf der Hinterachse.
- Fig. 3bb: zeigt einen vergrößerten Ausschnitt des hinteren Teils des Mähwerks gemäß Fig. 3b
- Fig. 3bbb: zeigt die freigelegte Verstelleinrichtung als vergrößerten Ausschnitt des hinteren Teils des Mähwerks gemäß Fig. 3bb

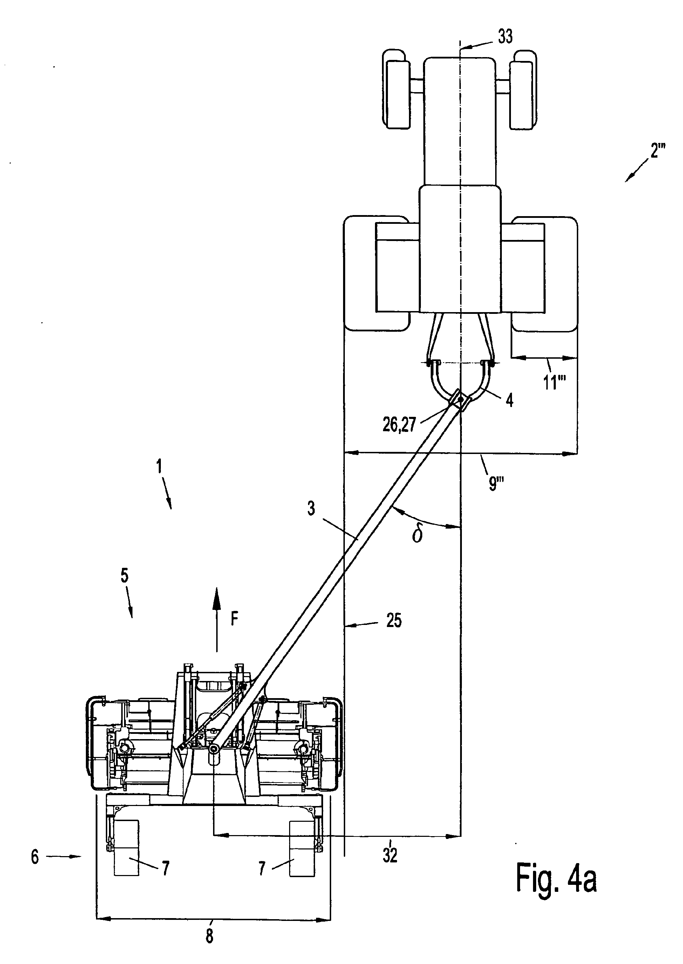

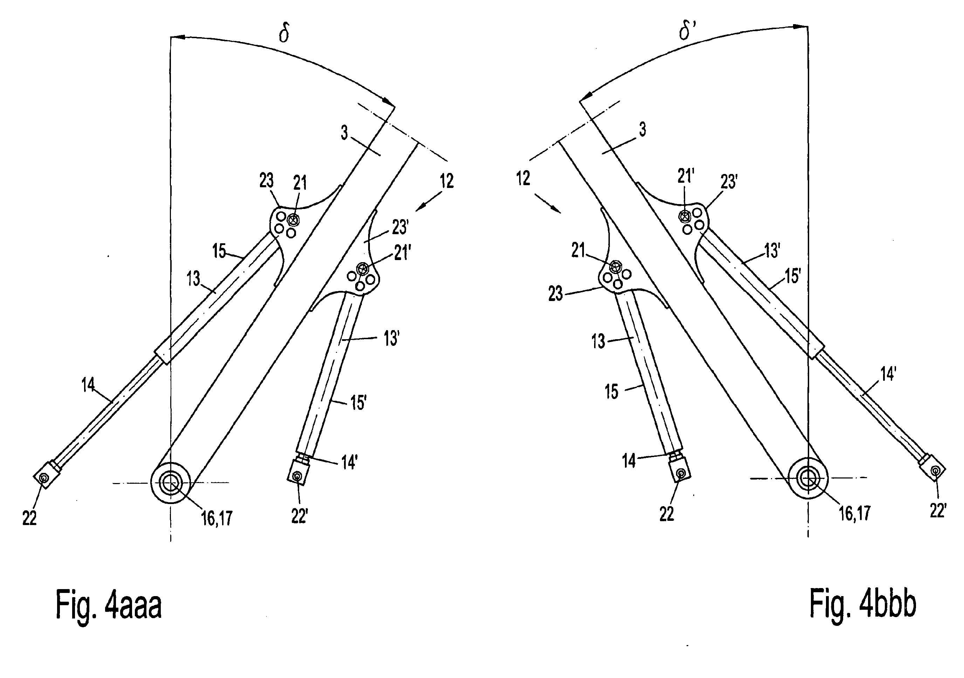

- Fig. 4a: zeigt ein in Arbeitsstellung verschwenktes Mähwerk linksseitig vom Traktor mit größerer Spurbreite der hinteren Achse und deren Hinterräder und extrem breiterer Bereifung auf der Hinterachse.

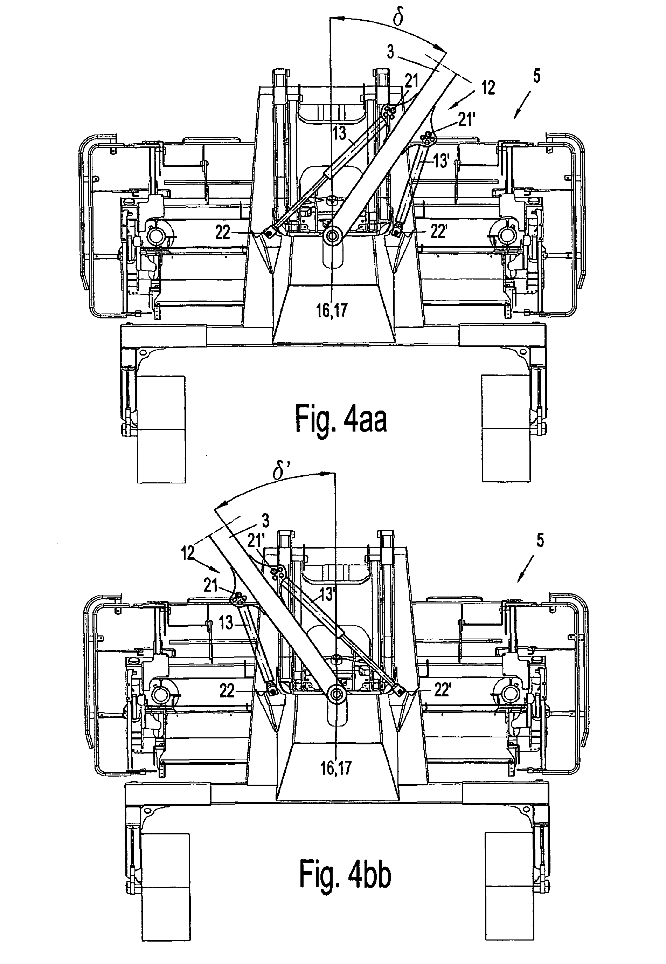

- Fig. 4aa: zeigt einen vergrößerten Ausschnitt des hinteren Teils des Mähwerks gemäß Fig. 4a

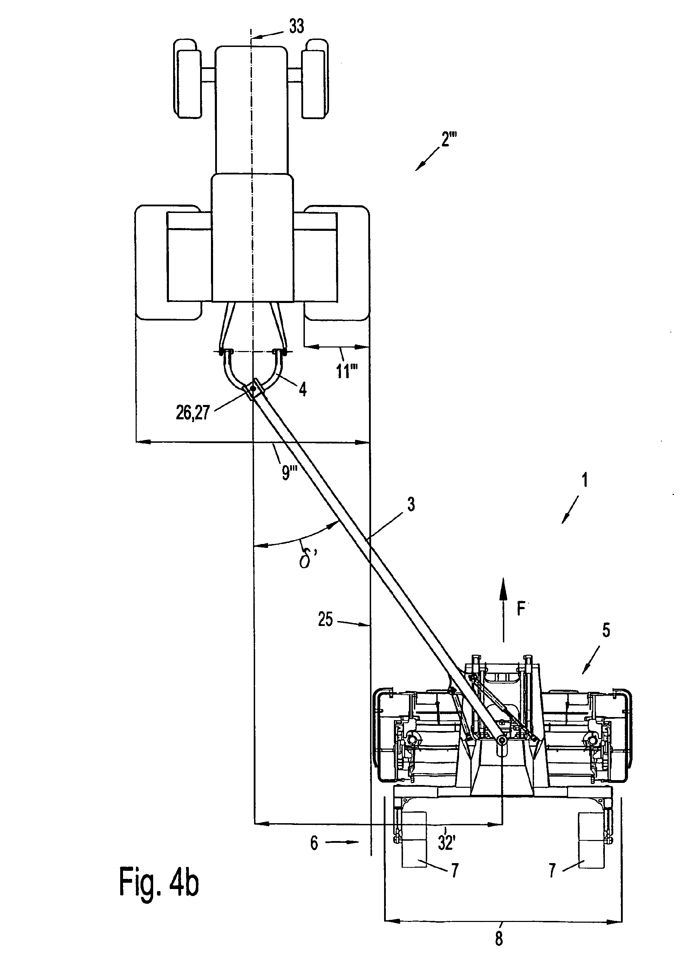

- Fig. 4aaa: zeigt die freigelegte Verstelleinrichtung als vergrößerten Ausschnitt des hinteren Teils des Mähwerks gemäß Fig. 4aa
- Fig. 4b: zeigt ein in Arbeitsstellung verschwenktes Mähwerk rechtsseitig vom Traktor mit größerer Spurbreite der hinteren Achse und deren Hinterräder und extrem breiterer Bereifung auf der Hinterachse.
- Fig. 4bb: zeigt einen vergrößerten Ausschnitt des hinteren Teils des Mähwerks gemäß Fig. 4b
- Fig. 4bbb: zeigt die freigelegte Verstelleinrichtung als vergrößerten Ausschnitt des hinteren Teils des Mähwerks gemäß Fig. 4bb

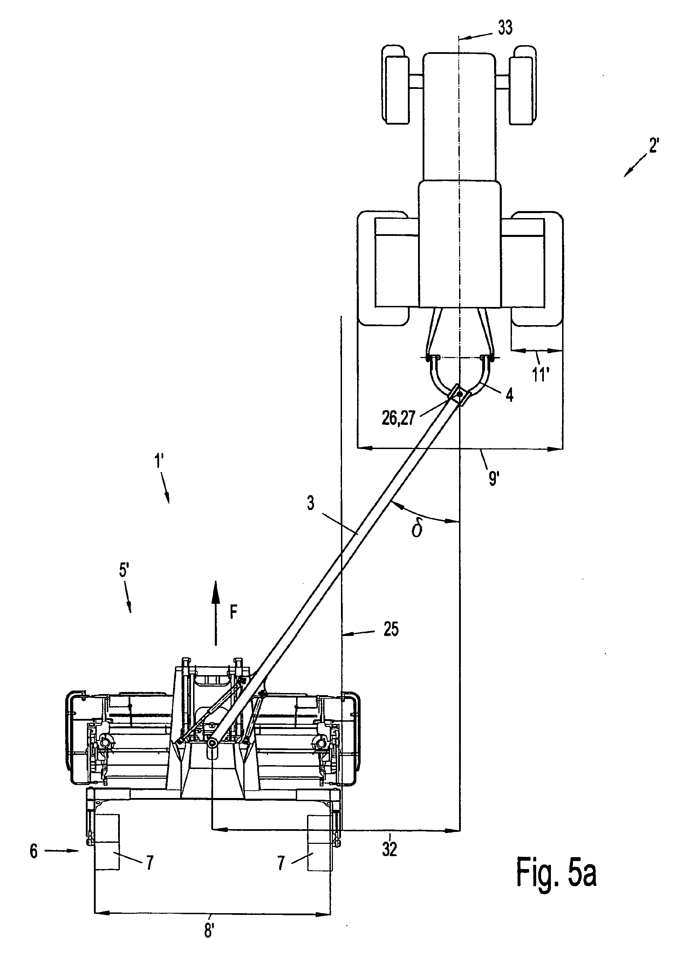

- Fig. 5a: zeigt ein in Arbeitsstellung verschwenktes Mähwerk mit größerer Arbeitsbreite linksseitig vom Traktor.

- Fig.5a: zeigt ein in Arbeitsstellung verschwenktes Mähwerk mit größerer Arbeitsbreite rechtsseitig vom Traktor.

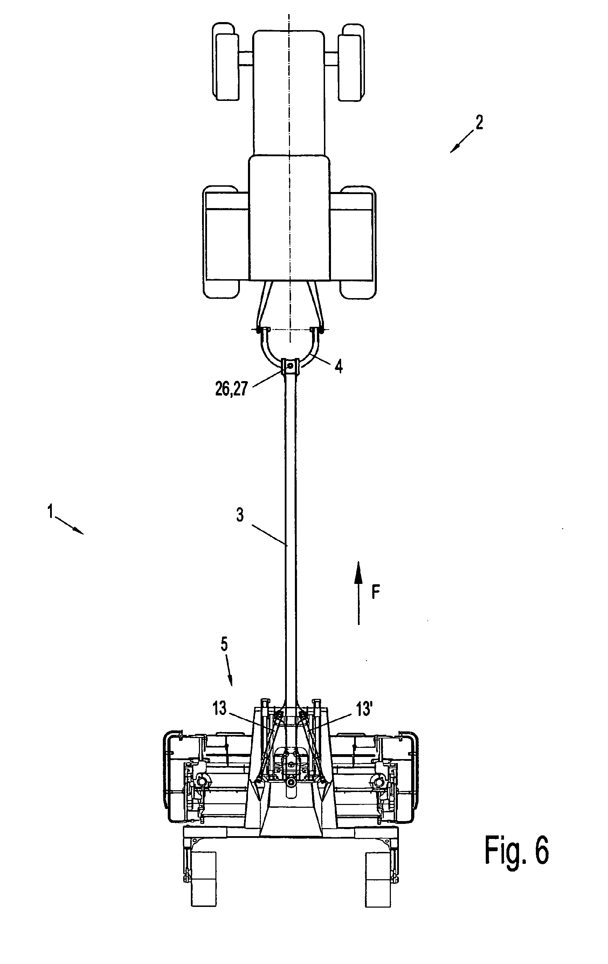

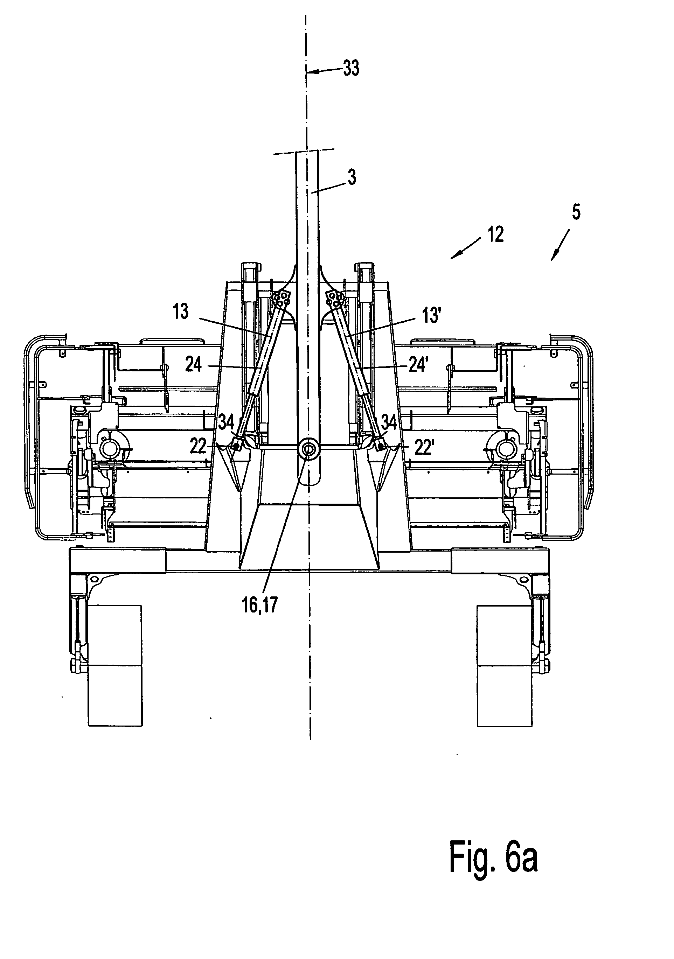

- Fig. 6: zeigt ein in Transportstellung verschwenktes Mähwerk.
- Fig. 6a: zeigt einen vergrößerten Ausschnitt aus Fig. 6

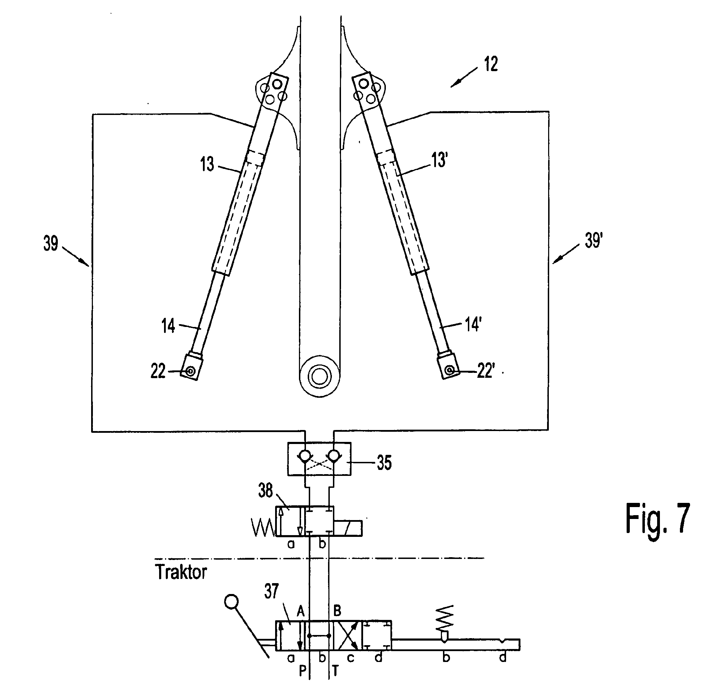

- Fig. 7: zeigt ein Ausführungsbeispiel einer hydraulischen Beschaltung

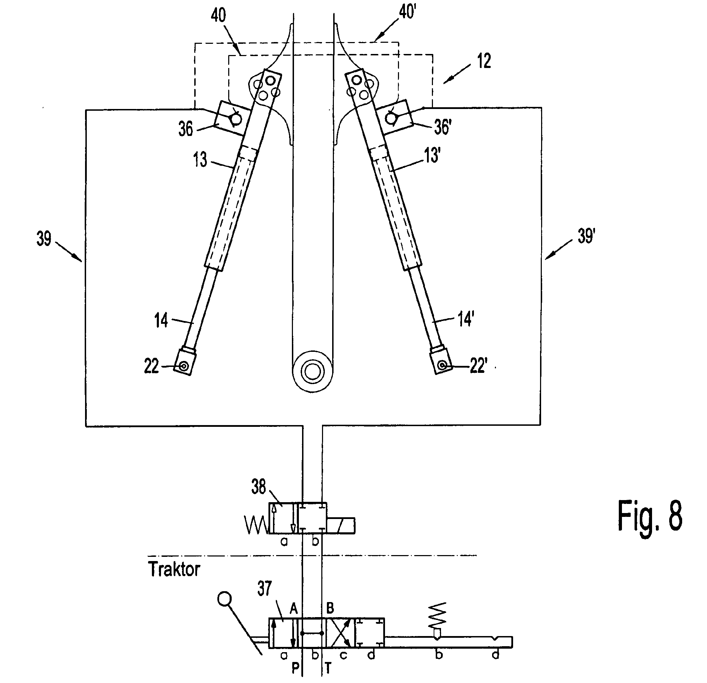

- Fig. 8: zeigt ein Ausführungsbeispiel einer hydraulischen Beschaltung

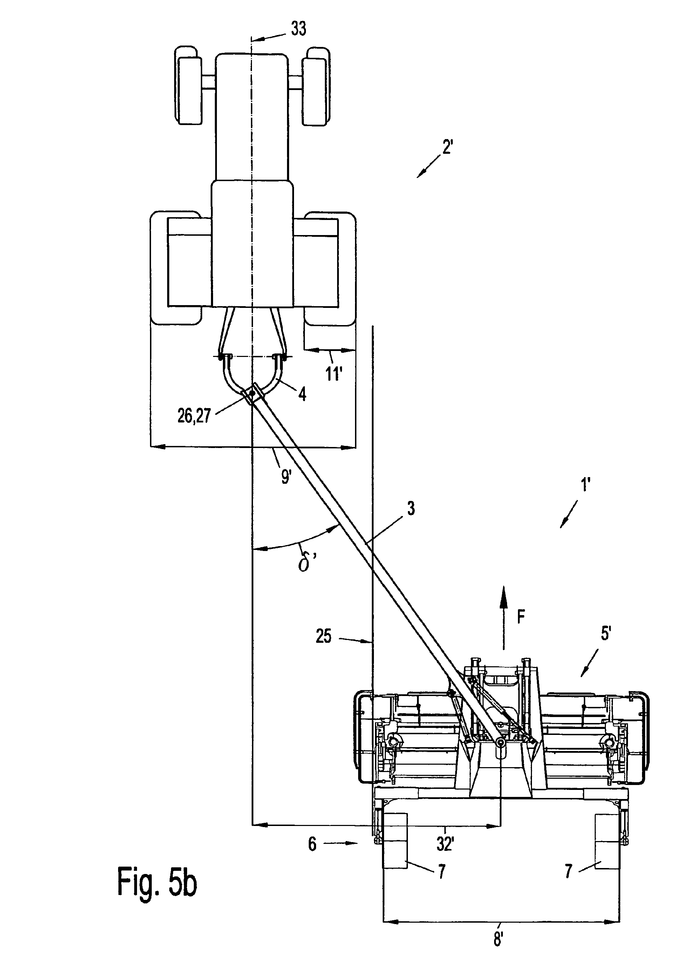

Die vorgenannte Serie von Figurendarstellungen Fig.1a bis Fig. 4bbb soll den Kern der Erfindung weitgehend selbsterklärend deutlich machen am Beispiel verschiedener Traktoren 2,2',2".2"' mit unterschiedlichen Spurbreiten 9,9',9",9"' und unterschiedlichen Reifenbreiten 11,11',11 ",11 "' der Hinterräder 10 der Hinterachse eines Traktors, wie zuvor angesprochen. Das wesentliche Unterscheidungsmerkmal der Traktoren 2,2',2".2"' ist die Spurbreite 9,9',9",9"' und der Reifenbreiten 11,11',11",11"', deren Beträge gemäß der Kennzeichnung in den Figurendarstellungen mit zunehmender Anzahl der Hochkomma auch zunehmend größer sein sollen. Die angehängte Landmaschine 1' mit den Mäheinheiten 5' und deren Arbeitsbreite 8' in den Figurendarstellungen Fig.5a und Fig.5b hingegen unterscheidet sich von den Mäheinheiten 5 mit der Arbeitsbreite 8 der Landmaschinen 1 der vorhergehenden Figurendarstellungen Fla,Flb,F2a,F2b,F3a,F3b,F4a,F4b lediglich durch eine größere Arbeitsbreite 8'.

Die angehängte Landmaschine 1,1' weist eine Zugdeichsel 3 mit einer Anschlussvorrichtung 4 und einer Mäheinheit 5,5' auf. Der hintere Teil der Landmaschine 1, in dem Ausführungsbeispiel als Mäheinheit 5,5' ausgebildet, weist ein Fahrwerk 6 mit Laufrädern 7 auf, welche den hinteren Teil 5 ausgebildet als Mäheinheit der Landmaschine 1 am Boden abstützen.

Der vordere Teil der Zugdeichsel 3 ist mittels eines Schwenkgelenks 26, verschwenkbar um die Hochachse 27 mit der Anschlussvorrichtung 4 verbunden und der hintere Teil der Zugdeichsel 3 ist mit dem hinteren Teil der Landmaschine, der Mäheinheit 5,5', schwenk- und feststellbar in dem Schwenkgelenk 16 mit deren Hochachse 17 verbunden. In dem Ausführungsbeispiel wird die Anschlussvorrichtung 4 von den Unterlenkeranschlusspunkten des Krafthebers des Traktors 2,2',2",2"' aufgenommen. Somit kann die Zugdeichsel 3 der Landmaschine 1,1' in der Kurvenfahrt um die Hochachse 26 verschwenken und der Spur und der Fahrtrichtung F des Traktors folgen.

Der hintere Teil der Zugdeichsel 3 weist eine Schwenk- und Blockiereinrichtung 12 auf, welche es ermöglich, die Zugdeichsel 3 um die Hochachse 27 des Schwenkgelenks 26 zu verschwenken. Dazu muss zunächst die noch näher zu beschreibende Blockiereinrichtung freigeschaltet werden, damit der Schwenkvorgang ausgeführt werden kann. Der Schwenkvorgang dient dazu, den hinteren Teil 5,5' bzw die Mäheinheit 5,5' der Landmaschine 1,1' aus der Transportstellung gemäß Fig. 6 in eine der Arbeitsstellungen links oder rechts seitlich des Traktors zu verschwenken bzw. zu versetzen. Dieses gilt auch umgekehrt. Ebenso ist vorgesehen, auch aus den verschieden Arbeitsstellungen links oder rechts des Traktors 1,1' heraus die Mäheinheit 5,5' direkt in die jeweils andere Arbeitsstellung versetzen zu können, wenn dieses gefordert ist z.B. bei Fahrtrichtungsumkehr an der Bestandskante 25 des noch stehenden und zu mähenden Grünfutters.

Die Schwenk- und Blockiereinrichtung 12 weist zwei Hydraulikzylinder 13,13' auf, die als Schwenkantriebe für den jeweiligen Schwenkvorgang komplementär zueinander ausgeführt sind, wobei jeweils nur einer der beiden Hydraulikzylinder 13,13' in dem Ausführungsbeispiel zur Betätigung der Schwenkbewegung kolbenbodenseitig druckbeaufschlagt wird und die Kolbenstange 14,14' des jeweils nicht druckbeaufschlagten Hydraulikzylinders 13,13' als komplementärer Hydraulikzylinder 13 oder 13' in das Zylindergehäuse 15,15' bis in seine Endlage einfährt, wodurch diese Endlage zugleich die Schwenkwinkelbegrenzung des Schwenkwinkels α,α',β,β',γ,γ'δ,δ' darstellt. Dabei sind die Einbaumaße 28,28' beider Hydraulikzylinder 13,13' identisch. Die Hydraulikzylinder 13,13' können auch als besonders kostengünstige Plungerzylinder ausgeführt sein. Beide Hydraulikzylinder 13,13' können in ihrer Ausgestaltung untereinander identisch sein. Die Hydraulikzylinder 13,13' überbrücken das Schwenkgelenk 16 und sind gelenkig in den Gelenkpunkten 22,22' zum einen an der Zugdeichsel 3 und zum anderen an der Mäheinheit 5,5' angeschlagen.

Festgestellt und blockiert in Ihrer Bewegung werden die Kolbenstangen 14,14' in dem Fachmann an sich bekannter Weise durch ein hydraulische Beschaltung mittels Sperrventile, ausgeführt beispielsweise als entsperrbarer leckagefreie Rückschlag- oder Wegesitzventile, die sowohl elektrisch als auch hydraulisch angesteuert werden können.

In einer weiteren Ausgestaltung der Erfindung könne die Schwenkwinkel α,α',β,β',γ,γ',δ,δ' stufenweise verändert werden ohne dass die Einbaulänge 28 der Hydraulikzylinder 13,13' verändert werden muss. Zu diesem Zweck können die Hydraulikzylinder 13,13' in ihren Lagen und Angriffspunkten in verschiedenen Positionen von komplementären Absteckpunkten 18,18',19,19',20,20', 21,21' einer Absteckkonsole 23,23' verändert werden. Die Komplementarität der Absteckpunkte 18,18',19,19',20,20',21,21' bezieht sich dabei auf die komplementären Hydraulikzylinder 13,13'. Auch die Absteckkonsolen 23,23' sind komplementär und diametral spiegelsymmetrisch zueinander angeordnet und in dem Ausführungsbeispiel fester Bestandteil der Zugdeichsel 3, wobei diese aber alternativ auch fester Bestandteil des hinteren Teils der Landmaschine 1, im Ausführungsbeispiel der Mäheinheit 5,5', sein können.

Die Wirkung der unterschiedlichen Absteckpositionen und damit einhergehend die Veränderung der jeweiligen Schwenkwinkel α,α',β,β',γ,γ',δ,δ' geht aus den Figurendarstellungen Fig.1aa,Fig.1bb, Fig.2aa,Fig.2bb, Fig.3aa,Fig.3bb, Fig.4aa,Fig.4bb sowie Fig.laaa,Fig.bbb, Fig.2aaa,Fig.2bbb, Fig.3aaa,Fig.3bbb, Fig.4aaa,Fig.4bbb hervor, Die Veränderung der Schwenkwinkel α,α',β,β',γ,γ',δ,δ' bedeutet zugleich eine Veränderung des seitlichen Querversatzes 29,29',30,30',31,31',32,32' des hinteren Teils bzw. der Mäheinheit 5,5' relativ zur vertikalen Längsmittelebenen 33 des Traktors 2,2',2",2"'.

Werden die Hydraulikzylinder 13,13' in die Absteckpositionen der Absteckpunkte 18,18' montiert, ergibt sich ein spitzerer Schwenkwinkel (α,α') als in den Positionen 19,19' mit dem Schwenkwinkel β,β'. Analog gilt, werden die Hydraulikzylinder 13,13' in der Absteckpositionen der Absteckpunkte 19,19' montiert, ergibt sich ein spitzerer Schwenkwinkel (β,β') als in den Absteckpositionen der Absteckpunkte 20,20' mit dem Schwenkwinkel γ,γ'. Dieses gilt analog auch für die Absteckpositionen der Absteckpunkte 21,21' mit dem Schwenkwinkel δ,δ'.

Fig.6 zeigt die angehängte Landmaschine 1 bzw. dass Mähwerk in der Transportstellung und Fig.6a zeigt einen vergrößerten Ausschnitt aus Fig. 6. In der Transportstellung verschwinden die Schwenkwinkel α,α',β,β',γ,γ',δ,δ'identisch zu Null. Die Transportstellung ist zugleich die Mittelstellung der Zugdeichsel 3, die als Mittendeichsel ausgebildet ist. Dabei sind in dieser Mittelstellung die Längsachsen 24,24' der Hydraulikzylinder 13,13' und die geometrische Lage der Absteckpunkte 18,18',19,19',20,20',21,21',22,22' diametral spiegelbildlich zueinander angeordnet. Fig.6a zeigt außerdem ein Ausführungsbeispiel dafür, das dass Einbaumaß (28,28') durch eine stufenlose Verstelleinrichtung, ausgeführt als Gewindespindel (34), veränderbar sein kann, so dass eine Korrektur bzw. eine Feinjustierung der Stelleinrichtung 12 bezüglich der die Schwenkwinkel α,α',β,β',γ,γ',δ,δ'möglich ist. Diese Fig.6a zeigt die Möglichkeit auf, dass diese stufenlose Verstelleinrichtung als Gewindespindel (34) Teil der Kolbenstange (14,14') sein kann, die in an sich bekannter Weise in den Gabelkopf der Kolbenstange eingreift.

Fig.7 und Fig.8 zeigen zwei Ausführungsbeispiele einer hydraulischen Beschaltung als Teil der Schwenk- und Blockiereinrichtung 12. Ausgehend von einem doppelt wirkenden Steuergerät 37 können die Schwenkvorgänge vom Traktor aus durchgeführt werden. Beiden Hydraulikzylindern 13,13' ist im Ausführungsbeispiel Fig.7 eine hydraulisch entsperrbares Zwilling-Rückschlagventil 35 vorgeschaltet, welches die Hydraulikzylinder 13,13' kolbenbodenseitig mittels der hydraulischen Verbindungsleitungen 39,39' mit dem Steuergerät 37 verbindet. Dem Zwilling-Rückschlagventil 35 vorgeschaltet ist ein Sperrventil als elektrisch betätigtes Wegeventil 38 mit Sperrstellung, welches als zusätzliche Sicherheitseinrichtung vorgibt, ob eine Betätigung der Schwenkeinrichtung 12 möglich ist oder nicht. In Fig.8 ist das Zwilling-Rückschlagventil 35 durch zwei einzelne hydraulisch entsperrbare Rückschlagventile 36, welche jeweils über die Steuerleitungen 40,40' im Betätigungsfall entsperrt werden. Die Rückschlagventile 36 können in vorteilhafter Weise direkt mit dem Zylindergehäuse 15,15' eine feste Einheit bilden und sind somit direkter Bestandteil der Hydraulikzylinder 13,13'.

Das Ausführungsbeispiel als Mähwerk steht exemplarisch für angehängten Maschinen für den landwirtschaftlichen Einsatz mit seitlichem Querversatz zur vertikalen Längsmittelebene der Zugmaschine und die in der Straßentransportstellung mittig hinter dem Zugfahrzeug laufen sollen. So können beispielsweise auch Heuwerbungsmaschinen, wie Schwader oder Wender oder angehängte Maschinen mit Pick up - Aufsammeleinrichtungen, wie Ballenpressen oder Ladewagen mit der erfindungsgemäßen Schwenk- und Blockiereinrichtung (12) ausgestattet sein.

### Bezugszeichenliste

- 1,1': angehängte Landmaschinen (Mähwerk)
- 2,2',2",2"': Zugmaschine, Traktor
- 3: Zugdeichsel
- 4: Anschlussvorrichtung
- 5,5': hinterer Teil der Maschine (Mäheinheit)
- 6: Fahrwerk
- 7: Laufräder
- 8,8': Arbeitsbreite Landmaschine (Mähwerk)
- 9,9',9",9"': Spurbreite Traktor
- 10: Hinterräder Traktor
- 11,11',11 ",11: "'Reifenbreite Traktor
- 12: Schwenk- und Blockiereinrichtung
- 13,13': Hydraulikzylinder
- 14,14': Kolbenstange
- 15,15': Zylindergehäuse
- 16: Schwenkgelenk
- 17: Hochachse
- 18,18': Absteckpunkt
- 19,19': Absteckpunkt
- 20,20': Absteckpunkt
- 21,21': Absteckpunkt
- 22,22': Gelenkpunkt
- 23,23': Absteckkonsole

- 24,24': Längsachse Hydraulikzylinder
- 25: Bestandskante
- 26: Schwenkgelenk
- 27: Hochachse
- 28,28': Einbaumaß
- 29,29': seitlichen Querversatz
- 30,30': seitlichen Querversatz
- 31,31': seitlichen Querversatz
- 32,32': seitlichen Querversatz
- 33: vertikale Längsmittelebene
- 34: Gewindespindel
- 35: Zwillings-Rückschlagventil
- 36: Rückschlagventil
- 37: doppelt wirkendes Steuergerät
- 38: elektrisch betätigtes Wegeventil
- 39,39': hydraulische Verbindungsleitung
- 40,40': hydraulische Verbindungsleitung
- α,α': Schwenkwinkel
- β'β': Schwenkwinkel
- γ,γ': Schwenkwinkel
- δ,δ': Schwenkwinkel
- F: Fahrtrichtung

## Patentansprüche

1. Lndwirtschaftliche Maschine (1) mit einer schwenk- und feststellbaren Zugdeichsel (3) zum Anhängen an ein Zugfahrzeug (2), wobei die Zugdeichsel (3) schwenk- und feststellbar mit dem nachlaufenden Teil der landwirtschaftlichen Maschine in einem Gelenkpunkt (16) mit einer Hochachse (17) derart verbunden ist, dass die landwirtschaftlichen Maschine mit einem seitlichen Querversatz zur Spur des Zupfahrzeugs (2) geführt Werden kann, wobei der Schwenkbereich der Zugdeichsel (3) so bemessen ist, dass der nachlaufende Teil (5) der Landmaschine beidseitig, wahlweise links oder rechts zur Fahrspur des Zugfahrzeugs (2) mittelt einer mechanisch betätigbaren Schwenkeinrichtung, bestehend aus zwei Hydraulikzylindern (13,13'), um einen seitlichen Querversatz versetzt werden kann, wobei die Schwenkeinrichtung zugleich als Blockiereinrichtung (12) der Zugdeichsel (3) ausgeführt ist, **dadurch gekennzeichnet, dass** die Hydraulikzylinder (13,13'), derart miteinander in Wirkverbindung stehen, dass jeweils einer der beiden Kolbenstangen (14,14') der Hydraullikzylinder (13,13') zur Betätigung der Schwenkbewegung ausfährt und die Kolbenstange (14,14') des jeweils komplementäre Hydraulikzylinders (13,13') in sein Zylindergehäuse (15,15') bis in die Endlage einfährt, wobei diese Endlage zugleich die Schwenkwinkelbegrenzung des Schwenkwinkeis (α,α',β,β',γ,γ',δ,δ') darstellt und wobei die Stell- und Btookiereinnchtung (12) Mittel zur Veränderung der Schwenkwinkel (α,α',β,β',γ,γ',δ,δ') beinhaltet, welche unterschiedliche und zumindest zwei benachbarte und komplementäre Absteckpunkte (18,18',19,19',20,20',21,21') entweder kolbenstangen- oder zylinderbodenseitig als Anlenkpunkte für die Hydraulikzylinder (13,13') aufweist und wobei in der Mittelstellung der Zugdeichsel (3) die Gelenkpunkte (22,22') dre hydraulikzylinder, die Längsachsen (24,24') der Hydraulikzylinder (13,13') und die geometrische Zuordnung der Absteckpunkte (18,18',19,19',20,20',21,21',22,22') diametral splegeibildlich zueinander angeordnet sind

2. Landwirtschaftliche Maschine nach Anspruch 1, **dadurch gekennzeichnet, dass** die Zugdeichsel (3) als Mittendeichsel ausgebildet ist.

3. Landwirtschaftliche Maschine nach Anspruch 1 und 2, **dadurch gekennzeichnet, dass** die in das Zylindergehäuse (15,15') einfahrende Kolbenstange (14,14') drucklos betätigt wird und die aus dem Zylindergehäuse (15,15') ausfahrende Kolbenstange (14,14') kolbenbodenseitig druckbeaufschlagt wird.

4. Landwirtschaftüche Maschine nach Anspruch 3, **dadurch gekennzeichnet, dass** die Hydraulikzylinder (13,13') als einfach wirkende Hydraulikzylinder (13,13') ausgebildet sind.

5. Landwirtschaftliche Maschine nach Anspruch 4, **dadurch gekennzeichnet, dass** die Hydraulikzylinder (13,13') als Plungerzylinder ausgebildet sind.

6. Landwirtschaftliche Maschine nach Anspruch 1 bis 4, **dadurch** gekenntzeichnet, das die Einbaumaße (28,28') beider Hydraulikzylinder (13,13') untereinander identisch sind.

7. Landwirtschaftliche Maschine nach Anspruch 1 bis 4, **dadurch gekennzeichnet, dass** die Hydraulikzylinder (13,13') in ihrer Ausgestaltung untereinander identisch sind.

8. Landwirtschaftliche Maschine nach Anspruch 1, **dadurch gekennzeichnet, dass** beiden Hydraulikzylindern (13,13') der Schwenk- und Blockiereinrichtung (12) ein gemeinsames Sperrventil als hydraulisch entsperrbares Zwillings-Rückschlagventil (35) aufweist.

9. Landwirtschaftliche Maschine nach Anspruch 1, **dadurch gekennzeichnet, dass** jeder Hydraulikzylindern (13,13') der Schwenk- und Blockiereinrichtung (12) ein Sperrventil als hydraulisch entsperrbares Rückschlagventil (36) aufweist.

10. Landwirtschaftliche Maschine nach Anspruch 8 oder 9, **dadurch gekennzeichnet, dass** das Rückschlagventil (36,36') Bestandteil des jeweiligen Hydraulikzylinders (13,13') ist.

11. Landwirtschaftliche Maschine nach Anspruch 8 oder 9, **dadurch gekennzeichnet, dass** dem oder den Sperrventil(en) als hydraulisch betätigte Rückschlagventil (35,38,38') ein elektrisch betätigtes Wegeventil (38) vorgelagert ist.

12. Landwirtschaftliche Maschine nach Anspruch 8, **dadurch gekennzeichnet, dass** das Einbaumaß (28,28') durch eine stufenlose Verstelleinrichtung, ausgeführt als Gewindespindel (34) veränderbar, ist.

13. Landwirtschaftliche Maschine nach Anspruch 92, **dadurch gekennzeichnet, dass** die Gewindespindel (34) Teil der Kolbenstange (14,14') ist.

14. Landwirtschaftliche Maschine nach Anspruch 1 in Verbindung mit einem oder mehreren der vorhergehenden Ansprüche, **dadurch gekennzeichnet, dass** die landwirtschaftliche Maschine (1) ein Mähwerk ist.

15. Landwirtschaftliche Maschine nach Anspruch 1 in Verbindung mit einem oder mehreren der vorhergehenden Ansprüche, **dadurch gekennzeichnet, dass** die landwirtschaftliche Maschine (1) eine Heuwerbungsmaschine, ein Wender oder Schwader ist.

16. Landwirtschaftliche Maschine nach Anspruch 1 in Verbindung mit einem oder mehreren der vorhergehenden Ansprüche, **dadurch gekennzeichnet, dass** die landwirtschaftliche Maschine (1) eine Ballenpresse oder ein Ladewagen mit einer Pick up - Aufnahmeeinrichtung ist.

## Claims

1. An agricultural machine (1) having a drawbar (3) which can be pivoted and fixed for attachment to a towing vehicle (2), wherein the drawbar (3) is connected pivotably and fixably to the trailing part of the agricultural machine at a pivot point (16) with a vertical axle (17) in such a way that the agricultural machine can be guided with a lateral transverse offset relative to the track of the towing vehicle (2), wherein the pivotal range of the drawbar (3) is such that the trailing part (5) of the agricultural machine can be displaced by a literal transverse offset at both sides selectively to the left or the right relative to the travel track of the towing vehicle (2) by means of a mechanically actuable pivoting device comprising two hydraulic cylinders (13, 13'), wherein the pivoting device is at the same time in the form of a blocking device (12) for the drawbar (3), **characterised in that** me hydraulic cylinders (13, 13') are operatively connected to each other in such a way that a respective one of the two piston rods (14, 14') of the hydraulic cylinders (13, 13') extends for actuation of the pivotal movement and the piston rod (14, 14') of the respectively complementary hydraulic cylinder (13, 13') retracts into its cylinder housing (15, 15') into the end position, wherein said end position at the same time represents the limitation on the pivotal angle (α,α',β,β',γ,γ',δ,δ') and wherein the adjusting and blocking device (12) includes means for altering the pivotal angle (α,α',β,β',γ,γ',δ,δ') which has different and at least two adjacent and complementary connection points (18, 18', 19, 19', 20, 20', 21, 21') either at the piston rod side or the cylinder end side as pivot points for the hydraulic cylinders (13,13') and wherein in the central position of the drawbar (3) the hinge points (22, 22') of the hydraulic cylinders, the longitudinal axes (24, 24') of the hydraulic cylinders (13, 13') and the geometrical association of the connection points (18,18', 19, 19', 20, 20', 21, 21', 22, 22') are arranged in diametral mirror-image relationship with each other.

2. An agricultural machine according to claim 1 **characterised in that** the drawbar (3) is in the form of a centre drawbar.

3. An agricultural machine according to claim 1 and claim 2 **characterised in that** the piston rod (14, 14') which retracts into the cylinder housing (15, 15') is pressure-lessly actuated and the piston rod (14, 14') which extends from the cylinder housing (13,15') is subjected to pressure at the piston crown side.

4. An agricultural machine according to claim 3 **characterised in that** the hydraulic cylinders (13, 13') are in the form of single-acting hydraulic cylinders (13, 13').

5. An agricultural machine according to claim 4 **characterised in that** the hydraulic cylinders (13, 13') are in the form of plunger cylinders.

6. An agricultural machine according to claims 1 to 4 **characterised in that** the installation dimensions (28, 28') of both hydraulic cylinders (13, 13') are identical to each other.

7. An agricultural machine according to claims 1 to 4 **characterised in that** the hydraulic cylinders (13,13') are identical to each other in their design configuration.

8. An agricultural machine according to claim 1 **characterised in that** both hydraulic cylinders (13, 13') of the pivoting and blocking device (12) has a common check valve in the form of a hydraulically releasable dual non-return valve (35).

9. An agricultural machine according to claim 1 **characterised in that** each hydraulic cylinder (13, 13') of the pivoting and blocking device (12) has a check valve in the form of a hydraulically releasable non-return valve (36).

10. An agricultural machine according to claim 8 or claim 9 **characterised in that** the non-return valve (36, 36') is a constituent part of the respective hydraulic cylinder (13, 13').

11. An agricultural machine according to claim 8 or claim 9 **characterised in that** an electrically actuated directional control valve (38) is mounted upstream of the check valve or valves as the hydraulically actuated non-return valve (35, 36, 36').

12. An agricultural machine according to claim 6 **characterised in that** the installation dimension (28, 28') is variable by a stepless adjustment device in the form of a threaded spindle (34).

13. An agricultural machine according to claim. 12 **characterised in that** the threaded spindle (34) is part of the piston rod (14, 14').

14. An agricultural machine according to claim 1 in conjunction with one or more of the preceding claims **characterised in that** the agricultural machine (1) is a mowing apparatus.

15. An agricultural machine according to claim. 1 in conjunction with one or more of the preceding claims **characterised in that** the agricultural machine (1) is a hay making machine, a turning apparatus or a swather.

16. An agricultural machine according to claim 1 in conjunction with one or more of the preceding claims **characterised in that** the agricultural machine (1) is a bale press or a loading truck with a pickup receiving device.

## Revendications

1. Machine agricole (1) équipée d'un timon (3) pivotant et blocable pour l'attelage à un véhicule tracteur (2), le timon (3) étant relié de manière pivotante et blocable à la partie traînée de la machine agricole en un point d'articulation (16) comportant un axe vertical (17), de façon que la machine agricole puisse être guidée avec un décalage transversal latéral par rapport à la voie du véhicule tracteur (2), la plage de pivotement du timon (3) étant dimensionnée de façon que la partie traînée (5) de la machine agricole puisse être décalée des deux côtés, au choix à gauche ou à droite, selon un décalage transversal latéral par rapport à la voie du véhicule tracteur (2) au moyen d'un dispositif de pivotement à commande mécanique composé de deux vérins hydrauliques (13, 13'), le dispositif de pivotement étant conformé en même temps en dispositif de blocage (12) du timon (3), **caractérisé en ce que** les vérins hydrauliques (13, 13') coopèrent ensemble de façon qu'une des deux tiges de piston (14, 14') des vérins hydrauliques (13, 13') sorte pour commander le mouvement de pivotement et que la tige de piston (14, 14') du vérin hydraulique complémentaire (13, 13') respectif rentre dans son corps de vérin (15, 15') jusqu'à la position extrême, cette position extrême constituant en même temps la limitation d'angle de pivotement de l'angle de pivotement (α,α',β,β',γ,γ',δ,δ') et le dispositif de réglage et de blocage (12) comportant, pour faire varier les angles de pivotement (α, α', β, β', γ, γ', δ, δ'), des moyens qui présentent différents et au moins deux points d'ancrage (18, 18', 19, 19', 20, 20', 21, 21') voisins et complémentaires soit côté tige de piston, soit côté fond de vérin comme points d'articulation pour les vérins hydrauliques (13, 13') et les points d'articulation (22, 22') des vérins hydrauliques, les axes longitudinaux (24, 24') des vérins hydrauliques (13, 13') et l'association géométrique des points d'ancrage (18, 18', 19, 19', 20, 20', 21, 21', 22, 22') étant disposés de manière diamétralement symétrique les uns par rapport aux autres dans la position médiane du timon (3).

2. Machine agricole selon la revendication 1, **caractérisée en ce que** le timon (3) est conformé en timon central.

3. Machine agricole selon la revendication 1 et 2, **caractérisée en ce que** la tige de piston (14, 14') qui rentre dans le corps de vérin (15, 15') est actionnée sans pression et la tige de piston (14, 14') qui sort du corps de vérin (15, 15') est soumise à une pression côté fond de piston.

4. Machine agricole selon la revendication 3, **caractérisée en ce que** les vérins hydrauliques (13, 13') sont réalisés sous la forme de vérins hydrauliques (13, 13') à simple effet.

5. Machine agricole selon la revendication 4, **caractérisée en ce que** les vérins hydrauliques (13, 13') sont réalisés sous la forme de vérins plongeurs.

6. Machine agricole selon les revendications 1 à 4, **caractérisée en ce que** les dimensions d'installation (28, 28') des deux vérins hydrauliques (13, 13') sont identiques.

7. Machine agricole selon les revendications 1 à 4, **caractérisée en ce que** les vérins hydrauliques (13, 13') sont de conformation identique.

8. Machine agricole selon la revendication 1, **caractérisée en ce que** les deux vérins hydrauliques (13, 13') du dispositif de pivotement et de blocage (12) comportent une soupape d'arrêt commune sous la forme d'un double clapet antiretour déblocable hydrauliquement (35).

9. Machine agricole selon la revendication 1, **caractérisée en ce que** chaque vérin hydraulique (13, 13') du dispositif de pivotement et de blocage (12) comporte une soupape d'arrêt sous la forme d'un clapet antiretour déblocable hydrauliquement (36).

10. Machine agricole selon la revendication 8 ou 9, **caractérisée en ce que** le clapet antiretour (36, 36') fait partie du vérin hydraulique (13, 13') respectif.

11. Machine agricole selon la revendication 8 ou 9, **caractérisée en ce qu'**une valve de distribution à commande électrique (38) est montée en amont de la ou des soupapes d'arrêt sous forme de clapet antiretour à commande hydraulique (35, 36, 36').

12. Machine agricole selon la revendication 6, **caractérisée en ce que** la dimension d'installation (28, 28') peut être modifiée par un dispositif de réglage continu conformé en broche filetée (34).

13. Machine agricole selon la revendication 12, **caractérisée en ce que** la broche filetée (34) fait partie de la tige de piston (14, 14').

14. Machine agricole selon la revendication 1 conjointement avec une ou plusieurs des revendications précédentes, **caractérisée en ce que** la machine agricole (1) est une barre de coupe.

15. Machine agricole selon la revendication 1 conjointement avec une ou plusieurs des revendications précédentes, **caractérisée en ce que** la machine agricole (1) est une machine de fenaison, une faneuse ou une andaineuse.

16. Machine agricole selon la revendication 1 conjointement avec une ou plusieurs des revendications précédentes, **caractérisée en ce que** la machine agricole (1) est une presse à balles ou un véhicule de chargement équipé d'un dispositif de ramassage par pick-up.
